# FASCICULE DE BREVET EUROPEEN

(11) **EP 0 570 276 B1**
(45) Date de publication et mention de la délivrance du brevet: **18.09.1996**
(21) Numéro de dépôt: 93401206.3
(22) Date de dépôt: 12.05.1993
(51) Int. Cl.: B29C 45/16, B65D 47/08

(54) **Procédé de moulage par injection de plusieurs matières plastiques différentes d'une capsule à cordons décoratifs et capsules obtenues par ce procédé**
Verfahren zum Spritzgiessen von mehreren verschiedenen Kunststoffen für eine Kappe mit dekorativen Streifen und nach diesem Verfahren hergestellte Kappen
Method for injection moulding a plurality of different plastic materials for a cap with decorative beads and caps obtained by this method

(30) Priorité: 13.05.1992 FR 9205781
(43) Date de publication de la demande: 18.11.1993
(73) Titulaire: CRISTOUR SA, F-77470 Trilport (FR)
(72) Inventeur: Tournalia, Christian, F-77470 Fublaines (FR); Fernandez, Porin, F-94250 Gentilly (FR)
(74) Mandataire: Pinguet, André

(56) Documents cités:
- WO-A-86/04856
- FR-A- 2 050 827
- FR-A- 2 661 127
- PATENT ABSTRACTS OF JAPAN vol. 14, no. 93 (M-939)(4036) 21 Février 1990 & JP-A-01 304 919 (YOSHINO KOGYOSHO)
- PATENT ABSTRACTS OF JAPAN vol. 11, no. 102 (M-576)(2549) 31 Mars 1987 & JP-A-61 252 120 (KAMAYA KAGAKU KOGYO)
- PATENT ABSTRACTS OF JAPAN vol. 10, no. 159 (M-486)(2215) 7 Juin 1986 & JP-A-61 012 311 (KAMAYA KAGAKU KOGYO)

## Description

La présente invention se rapporte à un procédé de moulage, par injection de plusieurs matières plastiques différentes, d'une capsule à cordons décoratifs et aux capsules obtenues par ce procédé. Plus particulièrement, la présente invention concerne un tel procédé qui consiste à faire, dans un moule, plusieurs injections successives et consécutives de matières plastiques différentes et, au moins, en deux ou trois matières de composition et/ou de couleurs différentes pour obtenir, de ce même moule, une capsule de récipient pourvue d'au moins un cordon décoratif périphérique d'une certaine couleur et solidaire de son corps principal, ou encore de son couvercle, ces derniers étant de couleurs différentes du cordon et/ou constitués en matières plastiques différentes. En outre, la présente invention concerne les différentes capsules qui peuvent être obtenues par la mise en oeuvre de ce procédé dans un moule adapté pour ménager, dans les phases consécutives de son fonctionnement, plusieurs empreintes de moulage pour le corps principal et les divers cordons, et en utilisant une presse à pots d'injections perpendiculaires.

Dans les techniques actuelles de moulage par injection d'une pièce constituée de plusieurs parties distinctes, par exemple de couleurs différentes, on réalise une opération dite de "surmoulage" qui consiste à placer dans un moule d'injection une partie, constituée en une première matière plastique et réalisée antérieurement dans un autre moule d'injection, puis à injecter une deuxième matière plastique pour former une seconde partie de la pièce. Cette technique présente l'inconvénient de nécessiter plusieurs machines d'injection, c'est-à-dire en nombre correspondant à celui des parties de la pièce à réaliser et, par ailleurs, la liaison entre les différentes parties reste médiocre car chaque partie, réalisée dans une phase d'injection antérieure, est déjà durcie lorsque l'on pratique la phase suivante d'injection de la partie suivante.

On connaît un autre procédé antérieur de moulage par injection qui consiste à utiliser un moule ayant une chambre d'injection dont on peut modifier le volume à la demande au cours d'injections successives pour constituer successivement plusieurs parties de la pièce à réaliser, ces injections étant faites dans des conditions de températures et de pression telles que la matière injectée dans une phase suivant une phase précédente pénètre dans la matière injectée au cours de cette phase précédente, c'est-à-dire que les matières constituant les différentes parties présentent une interpénétration entre elles pour constituer une liaison, par exemple du type "à tenon et mortaise", ayant une bonne résistance mécanique. Ce procédé antérieur présente l'inconvénient de nécessiter des phases d'injection bien déterminées tant au point de vue température qu'au point de vue pression, c'est-à-dire des phases d'injection successives à des moments strictement contrôlés et n'ayant pas nécessairement des temps identiques entre les phases successives d'injection, ce qui présente un inconvénient notable pour un travail de moulage en série.

Plus précisément, par le brevet FR-A-2.661.127, on connaît un procédé de moulage d'une capsule à insert où l'on débute une injection simultanée dans un même moule d'une première et d'une seconde matières thermoplastiques pour former respectivement la capsule et l'insert, la seconde matière étant plus souple que la première. Avant refroidissement à coeur de la seconde matière, on réalise la jonction des deux matières en faisant pénétrer, autour de l'insert et sans surépaisseur, la première matière au coeur de la seconde, ceci en accentuant le retrait naturel que subit la seconde matière en se refroidissant, ainsi qu'en escamotant vers le bas un obturateur annulaire situé autour de l'insert sans interrompre l'injection de la première matière constituant la capsule, alors que la seconde matière constituant l'insert atteignait l'obturateur.

Par ailleurs, par le brevet JP-A-01.304.919, on connaît un procédé de moulage de résines synthétiques de différents types, où chaque résine est moulée indépendamment de l'autre ou des autres, en prévoyant dans deux moules mâle et femelle, des pièces de cloisonnage internes qui déterminent entre elles des cavités de remplissage pour les résines injectées, ces pièces de cloisonnage pouvant être librement déplacées de manière descendante pour constituer des barrières d'arrêt pour la première résine injectée, et de manière ascendante pour former des cavités pour une seconde résine injectée consécutivement.

En conséquence, c'est un des buts de la présente invention de fournir un procédé de moulage par injection qui se différencie des procédés connus actuellement et qui permet la fabrication de pièces constituées de plusieurs parties en matières plastiques différentes et dans lesquelles ces matières plastiques ne s'interpénètrent pas entre elles mais présentent toutefois une liaison superficielle suffisante pour résister à une séparation manuelle pendant leur utilisation, notamment, comme c'est présentement le cas, lorsque ces pièces sont sous forme de capsules à cordons décoratifs devant être engagées sur un goulot de récipient.

Il est bon de préciser que, dans le présent mémoire, les termes "matières plastiques différentes" doivent être interprétés dans le sens où la "différence" peut aussi bien provenir de la coloration de la matière en elle même, que de sa composition chimique, c'est-à-dire qu'une matière plastique d'une même composition chimique sera considérée comme "différente" si sa coloration n'est pas identique à celle de la matière employée lors de la ou des injections précédentes.

Conformément à la présente invention, ce procédé de moulage par injections successives et consécutives de plusieurs matières plastiques différentes, pour l'obtention notamment d'une capsule à cordons décoratifs solidaires de sa paroi d'enveloppe, laquelle enveloppe, pourvue d'un dessus comportant un orifice de versement ainsi qu'un couvercle muni d'une charnière au niveau de ce dessus, doit pouvoir être engagée sur le goulot d'un récipient, ce procédé utilisant, associé à une presse à pots permettant des injections perpendiculaires, un seul et unique moule dans lequel sont définies une première empreinte aux dimensions du corps principal ou enveloppe de la capsule et une seconde empreinte latérale aux dimensions du couvercle en position ouverte ayant une empreinte de charnière de liaison au niveau du dessus de la première empreinte comportant l'orifice de versement, ce procédé étant remarquable par le fait que le dessus de la première empreinte est surmonté verticalement par un premier poinçon dont la face frontale ménage l'orifice de versement, recouvre ce dessus et porte extérieurement un premier coulisseau annulaire pouvant être avancé ou reculé par rapport au niveau du dessus de la première empreinte, de manière que, au cours de la première phase d'injection d'une première matière plastique pour le moulage de l'enveloppe, de la charnière et du couvercle, un gradin périphérique à ce dessus de la première empreinte est formé par suite de la présence du bord frontal du premier coulisseau annulaire en position basse entourant le poinçon et dépassant la face frontale de celui-ci de la valeur du gradin, lequel est adapté pour loger un premier cordon décoratif qui sera moulé lors de la seconde phase d'injection, consécutive à la première phase, d'une seconde matière plastique après recul ou retrait immédiat, en position haute, du coulisseau pour que son bord frontal soit alors situé au niveau de la face frontale du poinçon lorsque la seconde phase d'injection débute.

Comme on l'a mentionné précédemment, avec ce procédé conforme à l'invention, il est possible de former un second cordon décoratif situé sur le bord périphérique au couvercle en prévoyant dans le moule un second poinçon dont la face frontale définit la paroi intérieure de ce couvercle et un second coulisseau annulaire entourant ce second poinçon dont le bord frontal définit, en position de recul, un logement périphérique pour le moulage du second cordon décoratif qui peut être constitué en une troisième matière plastique injectée dans le même temps que la phase d'injection du premier cordon décoratif en seconde matière plastique.

En outre, avec ce procédé, il est possible de former un troisième cordon décoratif situé sur le bord périphérique inférieur de l'enveloppe en prévoyant dans le moule un troisième poinçon situé et monté de manière opposée au premier poinçon et entouré par un troisième coulisseau dont le bord frontal définit, en position de recul, un logement périphérique pour le moulage du troisième cordon décoratif qui peut être constitué en même temps que la phase d'injection des premier et second cordons décoratifs si ceux-ci sont prévus mais, sinon, à la suite de la phase d'injection pour le moulage de l'enveloppe, de la charnière et du couvercle.

Bien entendu, et conformément à la présente invention, il est possible, par ce procédé de moulage, de mouler un ou plusieurs cordons périphériques sur l'extérieur de la paroi de l'enveloppe, en n'importe quel emplacement de celle-ci entre son bord inférieur et son dessus, en fournissant un logement de moulage pour un cordon par suite du recul d'un coulisseau annulaire dont la paroi interne délimite initialement, à cet emplacement, une partie verticale de la paroi externe de l'empreinte de cette enveloppe qui pourra toutefois présenter une conicité désirée de part et d'autre de cet emplacement ou, tout au moins, au dessus du cordon décoratif obtenu.

Comme on l'a dit précédemment, la présente invention concerne également une capsule comportant une enveloppe avec dessus présentant un orifice de versement et un couvercle ayant une charnière de liaison au niveau de ce dessus, cette capsule étant obtenue par la mise en oeuvre du procédé selon la présente invention et étant remarquable par le fait que le dessus de son enveloppe est pourvu d'un premier cordon moulé périphérique décoratif, cette capsule pouvant être, à la demande, pourvue d'un second cordon sur le bord périphérique de son couvercle, ainsi que d'un troisième cordon situé sur le bord périphérique inférieur de son enveloppe, laquelle peut éventuellement comporter, en n'importe quel emplacement de sa paroi externe, un ou plusieurs cordons périphériques externes, cette enveloppe, avec son dessus ainsi que son couvercle et sa charnière de liaison, étant moulés dans une première matière plastique, alors que le ou les cordons décoratifs sont tous prévus moulés par injection de matières plastiques différentes les unes des autres et de la première matière plastique, toutes ces matières se différenciant essentiellement par leur couleur propre mais chacune d'elle étant toutefois constituée, de préférence, à base de polypropylène.

D'autres caractéristiques de la présente invention apparaîtront de la description suivante faite en relation avec les dessins ci-joints dans lesquels:
- la figure 1 est une vue en coupe d'une capsule obtenue par le procédé conforme à la présente invention;
- la figure 2 est une vue en coupe, prise transversalement à la vue selon la figure 1;
- les figures 3 et 4 sont des vues en élévation-coupe axiale montrant la constitution du moule et son fonctionnement selon le procédé, faisant l'objet de la présente invention, pour l'obtention d'une capsule du même type que celle représentée en coupes dans les figures 1 et 2.

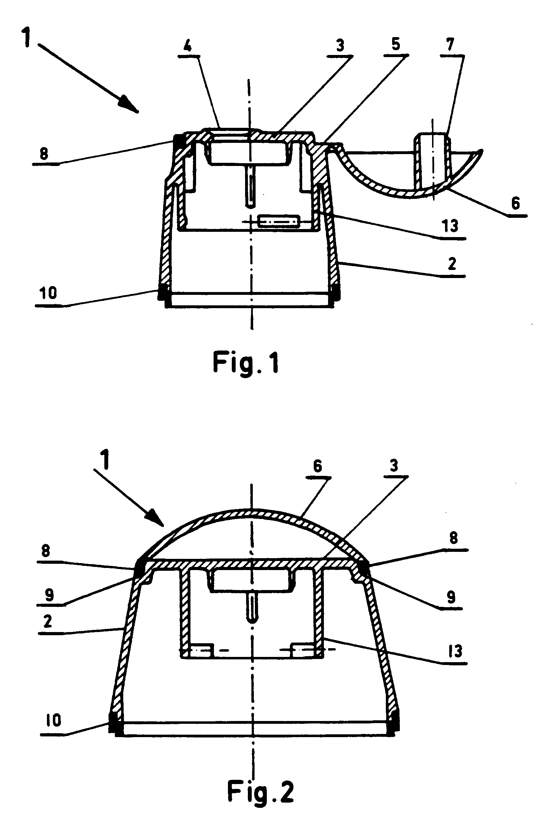

Comme le montrent ces figures 1 et 2, la capsule, indiquée dans son ensemble par la référence 1, est constituée d'une enveloppe 2 comportant une paroi de dessus 3 pourvue d'un orifice de versement 4 et ayant une charnière de liaison 5 avec son couvercle 6 (représenté ouvert encore en position de moulage dans la figure 1 et en position de fermeture dans la figure 2) pourvu d'un téton 7 de bouchage de l'orifice de versement 4. A la périphérie supérieure de l'enveloppe 2 et au niveau de sa paroi de dessus 3, est situé un cordon décoratif 8, sauf au droit de la charnière 5, logé solidairement dans un gradin 9 (teinté en noir pour faciliter la compréhension), de bordure de cette paroi de dessus 3. Cette enveloppe 2 est pourvue, en outre, d'un second cordon décoratif 10 (teinté également en noir) situé solidairement de son bord inférieur périphérique et destiné à reposer ou à s'enclencher partiellement sur la partie haute d'un récipient dont le goulot est engagé de manière étanche dans un manchon interne 13 faisant corps avec le dessous de la paroi de dessus 3 et entourant l'orifice de versement 4.

Selon la présente invention, l'enveloppe complète 2, la charnière de liaison 5 et le couvercle 6 sont constitués en une même première matière plastique, alors que le cordon décoratif 8 logé solidairement dans le gradin supérieur 9, ainsi que le second cordon décoratif 10 sont constitués respectivement en deux matières plastiques différentes en coloration de la première matière, note étant prise toutefois que, dans certains cas, leur coloration peut être choisie identique mais différente de celle de la première matière.

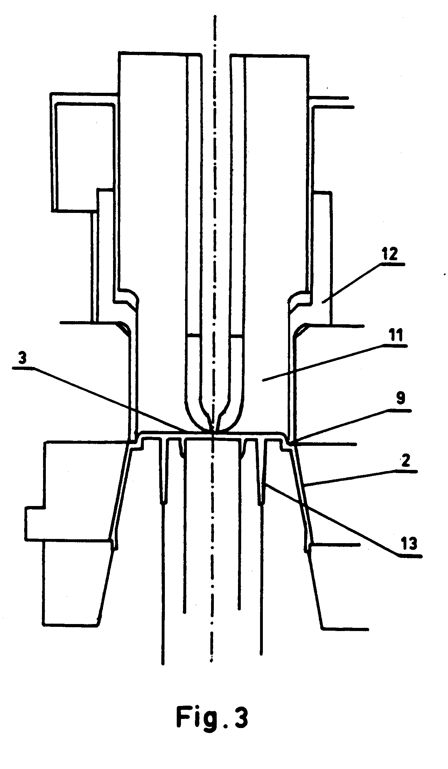

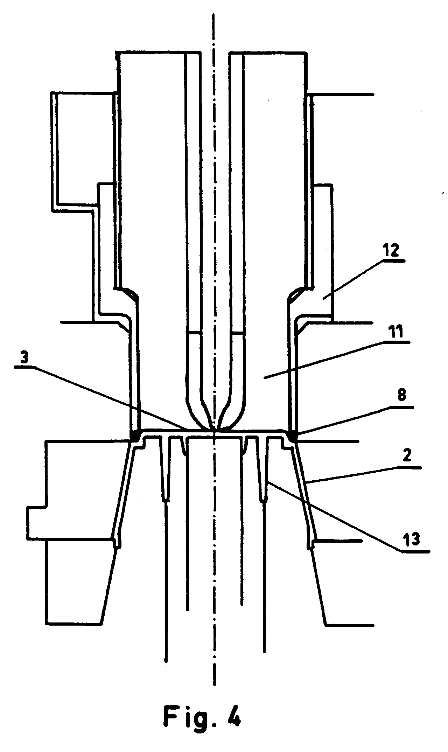

Comme on le voit dans les figures 3 et 4 montrant la constitution du moule pour l'obtention d'une capsule du type de celle des figures 1 et 2 mais comportant un seul cordon décoratif 8, périphérique à sa paroi de dessus 3, on a omis de représenter l'empreinte de la charnière 5 et du couvercle 6 pour faciliter la compréhension. Ce moule comporte donc une empreinte pour l'enveloppe 2 avec sa paroi de dessus 3, laquelle est surmontée par la face frontale d'un poinçon 11 vertical sur lequel est engagé, de manière coulissante, un coulisseau 12 annulaire dont le bord frontal dépasse, en position basse (figure 3), le niveau de la face frontale du poinçon pour ménager un gradin périphérique 9 autour de la paroi de dessus 3 de l'enveloppe lors du moulage de celle-ci par injection d'une première matière plastique, ce gradin 9 étant conçu pour loger solidairement un cordon décoratif 8 dont l'empreinte est obtenue par suite du recul en position haute (figure 4) du coulisseau 12 dont le bord frontal vient au niveau de la face frontale du poinçon, ce cordon 8 étant moulé par une injection, successive à la première injection, d'une seconde matière plastique, notamment différente en coloration de la première matière.

Comme on peut le comprendre aisément, on peut former par moulage, en bordure périphérique du couvercle, un autre cordon décoratif, de même qu'un autre encore cordon décoratif situé sur le bord périphérique inférieur de l'enveloppe (comme montré dans les figures 1 et 2) en prévoyant, dans le moule, plusieurs poinçons et coulisseaux correspondants constitués de la même manière que ceux des figures 3 et 4.

## Revendications

1. Procédé de moulage par injections successives et consécutives de plusieurs matières plastiques différentes pour l'obtention notamment d'une capsule, à cordons décoratifs solidaires de sa paroi d'enveloppe, laquelle enveloppe, pourvue d'un dessus comportant un orifice de versement ainsi qu'un couvercle muni d'une charnière au niveau de ce dessus, doit pouvoir être engagée sur le goulot d'un récipient, ce procédé utilisant,-associé à une presse à pots permettant des injections perpendiculaires, un seul et unique moule dans lequel sont définies une première empreinte aux dimensions du corps principal ou enveloppe (2) de la capsule et une seconde empreinte latérale aux dimensions du couvercle (6) en position ouverte ayant une empreinte de charnière de liaison (5) au niveau du dessus (3) de la première empreinte comportant l'orifice de versement (4),
ce procédé étant caractérisé par le fait que le dessus (3) est surmonté verticalement par un premier poinçon (11) dont la face frontale ménage l'orifice de versement, recouvre ce dessus (3) et porte extérieurement un premier coulisseau annulaire (12) pouvant être avancé ou reculé par rapport au niveau de ce dessus (3), de manière que, au cours de la première phase d'injection d'une première matière plastique pour le moulage de l'enveloppe (2), de la charnière (5) et du couvercle (6), un gradin périphérique (9) à ce dessus (3) est formé par suite de la présence du bord frontal du premier coulisseau annulaire (12) en position basse entourant le poinçon (11) et dépassant la face frontale de celui-ci de la valeur **de ce** gradin (9), qui est adapté pour loger un premier cordon décoratif (8) qui sera moulé lors de la seconde phase d'injection, consécutive à la première phase, d'une seconde matière plastique après recul ou retrait immédiat en position haute du coulisseau pour que son bord frontal soit alors situé au niveau de la face frontale du poinçon lorsque la seconde phase d'injection débute.

2. Procédé de moulage selon la revendication 1, caractérisé par le fait qu'il est applicable pour former un second cordon décoratif situé sur le bord périphérique au couvercle (6) en prévoyant dans le moule un second poinçon dont la face frontale définit la paroi intérieure de ce couvercle (6) et un second coulisseau annulaire entourant ce second poinçon dont le bord frontal définit, en position de recul, un logement périphérique pour le moulage du second cordon décoratif qui peut être constitué en une troisième matière plastique injectée dans le même temps que la phase d'injection du premier cordon décoratif en seconde matière plastique.

3. Procédé de moulage selon l'une ou l'autre des revendications 1 ou 2, caractérisé par le fait qu'il est applicable pour former un troisième cordon décoratif (10) situé sur le bord périphérique inférieur de l'enveloppe (2) en prévoyant dans le moule un troisième poinçon situé et monté de manière opposée au premier poinçon (11) et entouré par un troisième coulisseau dont le bord frontal définit, en position de recul, un logement périphérique pour le moulage du troisième cordon décoratif (10) qui peut être constitué en même temps que la phase d'injection des premier et second cordons décoratifs si ceux-ci sont prévus mais, sinon, à la suite de la phase d'injection pour le moulage de l'enveloppe (2), de la charnière (5) et du couvercle (6).

4. Procédé de moulage selon l'une quelconque des revendications 1 à 3, caractérisé par le fait qu'il est applicable pour former un ou plusieurs cordons périphériques sur l'extérieur de la paroi de l'enveloppe (2), en n'importe quel emplacement de celle-ci entre son bord inférieur et son dessus (3), en fournissant un logement de moulage pour un cordon par suite du recul d'un coulisseau annulaire dont la paroi interne délimite initialement, à cet emplacement, une partie verticale de la paroi externe de l'empreinte de cette enveloppe (2) qui pourra toutefois présenter une conicité désirée de part et d'autre de cet emplacement ou, tout au moins, au dessus du cordon décoratif obtenu.

5. Capsule, avec cordons décoratifs, moulée par injections successives et consécutives de plusieurs matières plastiques différentes, notamment en coloration, comportant une enveloppe (2) avec dessus présentant un orifice de versement (4) et un couvercle (6) ayant une charnière de liaison (5) au niveau de ce dessus,
cette capsule étant obtenue par la mise en oeuvre du procédé selon la revendication 1 et étant caractérisée par le fait que le dessus de son enveloppe (2) est pourvu d'un premier cordon moulé périphérique décoratif (8), cette capsule pouvant être, à la demande, pourvue d'un second cordon sur le bord périphérique de son couvercle, ainsi que d'un troisième cordon (10) situé sur le bord périphérique inférieur de son enveloppe, laquelle peut éventuellement comporter, en n'importe quel emplacement de sa paroi externe, un ou plusieurs cordons périphériques externes, cette enveloppe, avec son dessus ainsi que son couvercle et sa charnière de liaison, étant moulés dans une première matière plastique, alors que le ou les cordons décoratifs sont tous prévus moulés par injection de matières plastiques différentes les unes des autres et de la première matière plastique, toutes ces matières se différenciant essentiellement par leur couleur propre mais chacune d'elle étant toutefois constituée, de préférence, à base de polypropylène.

## Claims

1. A process of moulding by successive, consecutive injection of a plurality of different plastics materials to obtain, in particular, a cap with decorative beads integral with its shell wall, which shell, provided with a top comprising a pouring orifice as well as a cover provided with a hinge at the level of said top, must be able to engage with the neck of a receptacle, this process using - in conjunction with a press with cylinders permitting perpendicular injection - a single, unique mould in which are defined a first cavity having the dimensions of the main body or shell (2) of the capsule and a second lateral cavity having the dimensions of the cover (6) in the open position comprising a cavity with connecting hinge cavity (5) at the level of the top (3) of the first cavity comprising the pouring orifice (4), this process being characterised in that the top (3) is surmounted vertically by a first punch (11) whose front face forms the pouring orifice, covers this top (3) and carries on the outside a first annular slide (12) capable of being moved forward or back with respect to the level of this top (3), in such a way that, during the first phase of injection of a first plastics material for moulding the casing (2), the hinge (5) and the cover (6), a step (9) peripheral to this top (3) is formed as a result of the presence of the front edge of the first annular slide (12) in the bottom position surrounding the punch (11) and projecting beyond the front face thereof by the amount of this step (9), which is adapted to accommodate a first decorative bead (8) which will be moulded at the time of the second phase, consecutive to the first phase, of injection of a second plastics material after immediate backwards movement or withdrawal of the slide into the top position so that its front edge is then situated at the level of the front face of the punch when the second injection phase starts.

2. A moulding process according to claim 1, characterised in that it may be used to form a second decorative bead on the edge peripheral to the cover (6) by the provision in the mould of a second punch whose front face defines the inner wall of this cover (6) and a second annular slide surrounding this second punch, whose front edge defines, in the withdrawn position, a peripheral receptacle for the moulding of the second decorative bead, which may consist of a third plastics material injected at the same time as the phase of injection of the first decorative bead of a second plastics material.

3. A moulding process according to either one of claims 1 or 2, characterised in that it may be used to form a third decorative bead (10) situated on the lower peripheral edge of the casing (2) by providing in the mould a third punch situated and mounted opposite to the first punch (11) and surrounded by a third slide whose front edge defines, in the withdrawn position, a peripheral receptacle for the moulding of the third decorative bead (10) which may be formed at the same time as the phase of injection of the first and second decorative beads if the latter are provided but, if not, after the injection phase for moulding the shell (2), the hinge (5) and the cover (6).

4. A moulding process according to any one of claims 1 to 3, characterised in that it may be used to form one or more peripheral beads on the outside of the wall of the shell (2), at any site thereon between its lower edge and its top (3), by providing a moulding receptacle for a bead as a result of the backwards movement of an annular slide, the inner wall of which initially defines, at this site, a vertical part of the outer wall of the cavity of said shell (2) which may, however, exhibit the desired conicity on each side of this site or, at least, at the top of the decorative bead obtained.

5. A cap, with decorative beads, moulded by successive, consecutive injection of a plurality of plastics materials, different in particular in colour, comprising a shell (2) with a top having a pouring orifice (4) and a cover (6) comprising a connecting hinge (5) at the level of this top, this cap being obtained by the implementation of the process according to claim 1 and being characterised in that the top of its shell (2) is provided with a first decorative peripheral moulded bead (8), this cap being able to be provided, if so wished, with a second bead on the peripheral edge of its cover, as well as with a third bead (10) situated on the lower peripheral edge of its shell, which may optionally comprise, at any site on its outer wall, one or more outer peripheral beads, this shell being moulded, with its top and its cover and its connecting hinge, in a first plastics material, while the decorative bead(s) are all provided by injection-moulding of plastics materials which are different one from the other and from the first plastics material, all these materials differing substantially by colour but each of them preferably having a polypropylene base.

## Patentansprüche

1. Verfahren zum aufeinanderfolgenden und fortlaufenden Spritzgiessen von mehreren verschiedenen Kunststoffen, insbesondere zur Erlangung einer Kappe mit dekorativen, mit deren Mantelwand fest verbundenen Streifen, wobei der Mantel, der mit einem Oberteil versehen ist, das eine Ausgußöffnung sowie ein mit einem Gelenk auf der Höhe des Oberteils versehenen Deckel aufweist, auf dem Auslaß eines Behälters angeordnet werden können muß, wobei dieses Verfahren eine mit einer senkrechte Spritzungen erlaubenden Zylinderpresse verbundene einzige und einzigartige Spritzform verwendet, in der eine erste Matrize in den Abmessungen des Hauptkörpers oder Mantels (2) der Kappe und eine zweite seitliche Matrize in den Abmessungen des Deckels (6) in geöffneter Position definiert sind, die eine Matrize für das Verbindungsgelenk (5) in Höhe des Oberteils (3) der ersten, die Ausgußöffnung (4) enthaltenden Matrize hat, dadurch gekennzeichnet, daß das Oberteil (3) vertikal durch eine erste Dornstange (11) überragt wird, deren Stirnfläche die Ausgußöffnung bestimmt, das Oberteil (3) bedeckt und auf der Außenseite einen ersten Ringschieber (12) trägt, der in bezug auf die Höhe dieses Oberteils (3) vor- oder zurückgeschoben werden kann, so daß während der ersten Spritzphase eines ersten Kunststoffes für das Formen des Mantels (2), des Gelenks (5) und des Deckels (6) infolge des Vorliegens des stirnseitigen Randes des ersten Ringschiebers (12) in der abgesenkten Position, in der er die Dornstange (11) umgibt und deren Stirnfläche um die Höhe der Stufe (9) überragt, eine um das Oberteil (3) umlaufende Stufe (9) geformt wird, die so ausgebildet ist, daß sie einen ersten dekorativen Streifen (8) aufnimmt, der während der zweiten, der ersten Phase nachfolgenden Spritzphase eines zweiten Kunststoffes nach dem unmittelbaren Rücklauf oder Rückzug des Schiebers in die obere Position gegossen wird, damit sein stirnseitiger Rand dann in der Höhe der Stirnfläche der Dornstange liegt, wenn die zweite Spritzphase beginnt.

2. Spritzgiessverfahren nach Anspruch 1, dadurch gekennzeichnet, daß es anwendbar ist, um einen zweiten dekorativen Streifen, der auf dem umlaufenden Rand des Deckels (6) liegt, zu formen, indem in der Spritzform eine zweite Dornstange, deren Stirnfläche die Innenwand des Deckels (6) definiert, und ein zweiter, die zweite Dornstange umgebender Ringschieber vorgesehen werden, dessen stirnseitiger Rand in Rückzugposition eine umlaufende Aufnahme für das Gießen des zweiten dekorativen Streifens definiert, der aus einem dritten Kunststoff gebildet werden kann, welcher gleichzeitig mit der Spritzphase des ersten dekorativen Streifens aus dem zweiten Kunststoff gespritzt wird.

3. Spritzgiessverfahren nach einem der Ansprüche 1 oder 2, dadurch gekennzeichnet, daß es anwendbar ist, um einen dritten dekorativen Streifen (10) zu formen, der auf dem unteren umlaufenden Rand des Mantels (2) liegt, indem in der Spritzform eine dritte Dornstange vorgesehen wird, die entgegengesetzt zur ersten Dornstange (11) liegt und angebracht ist und durch einen dritten Schieber umgeben wird, dessen stirnseitiger Rand in Rückzugposition eine umlaufende Aufnahme für das Gießen des dritten dekorativen Streifens (10) definiert, der gleichzeitig mit der Spritzphase des ersten und zweiten dekorativen Streifens gebildet werden kann, wenn diese vorgesehen sind, anderenfalls jedoch nach der Spritzphase für das Gießen des Mantels (2), des Gelenks (5) und des Deckels (6).

4. Spritzgiessverfahren nach einem der Ansprüche 1 bis 3, dadurch gekennzeichnet, daß es anwendbar ist, um einen oder mehrere umlaufende Streifen an einer beliebigen Stelle auf der Außenseite der Wand des Mantels (2) zwischen dessen unterem Rand und dessen Oberteil (3) zu formen, indem es eine Gießaufnahme für einen Streifen nach dem Rückzug eines Ringschiebers schafft, dessen Innenwand anfänglich an dieser Stelle einen vertikalen Teil der Außenwand der Matrize des Mantels (2) begrenzt, der jedoch beiderseits dieser Stelle oder zumindest oberhalb des erhaltenen dekorativen Streifens eine gewünschte Konizität aufweisen kann.

5. Kappe mit dekorativen Streifen, gegossen durch aufeinanderfolgende und fortlaufende Spritzungen mehrerer, insbesondere farblich verschiedener Kunststoffe, umfassend einen Mantel (2) mit einem eine Ausgußöffnung (4) aufweisenden Oberteil und einen Deckel (6), der in Höhe des Oberteils ein Verbindungsgelenk (5) hat, wobei die Kappe durch die Durchführung des Verfahrens nach Anspruch 1 erzeugt wird und dadurch gekennzeichnet ist, daß das Oberteil ihres Mantels (2) mit einem ersten gegossenen, umlaufenden dekorativen Streifen (8) versehen ist, wobei die Kappe nach Wunsch mit einem zweiten Streifen auf dem umlaufenden Rand seines Deckels sowie mit einem dritten Streifen (10) versehen werden kann, der auf dem unteren umlaufenden Rand seines Mantels liegt, der eventuell an irgendeiner beliebigen Stelleseiner Außenwand einen oder mehrere äußere umlaufende Streifen aufweisen kann, wobei der Mantel mit seinem Oberteil sowie sein Deckel und sein Verbindungsgelgenk aus einem ersten Kunststoff gegossen werden kann, während der oder die dekorativen Streifen alle insgesamt durch Spritzung von voneinander und vom ersten Kunststoff verschiedenen Kunststoffen gegossen vorgesehen werden, wobei alle diese Stoffe sich im wesentlichen durch ihre eigentliche Farbe unterscheiden, aber jeder von ihnen jedoch vorzugsweise auf Polypropylenbasis gebildet ist.
